# EUROPEAN PATENT APPLICATION

(11) **EP 1 990 614 A2**
(43) Date of publication of application: **12.11.2008**
(21) Application number: 08007461.0
(22) Date of filing: 16.04.2008
(51) Int. Cl.: G01F 19/00

(54) **Measuring device**

(30) Priority: 11.05.2007 US 801669
(71) Applicant: SAR HOLDINGS INTERNATIONAL LIMITED, Central Hong Kong (CN)
(72) Inventor: Yeung, Hin Shing Ken, Tsim Sha Tsui Kowloon Hong Kong (CN)
(74) Representative: Koepe, Gerd L.

(57) **Abstract**

A measuring device is disclosed that includes a plurality of measuring cups connected through a ring. Each measuring cup has a lobed sidewall defining a plurality of lobes of an epicycloidal configuration. Each lobe of smaller cup contacts an inner surface of the sidewall of the larger cup to define a void between the cups that facilitates air to flow between the cups. The flow of air prevents suction between the cups The epicycloidal configuration defines a plurality of longitudinally raised portions that are adapted to stop an axial inward movement of the next smaller cup and hold next smaller cup in position. The epicycloidal configuration of the sidewall defines a plurality of channels that form a plurality of spouts within the container portion to permit drip-free pouring. The channels facilitate minimum inter-surface contact between the cups to prevent sticking of their surfaces.

## Description

### Background of the Invention

### Field of the Invention

The present invention relates to kitchen devices and more particularly to hand held measuring devices..

### Description of the Related Art

Hand held measuring devices can have a wide variety of configurations from single ingredient measuring spoons to stackable measuring cups The stackable measuring cups normally have different capacities to facilitate the measurement of different amounts of ingredients. When the cups are stacked, they fit so closely together that air in between the cups is squeezed out and they suction to each other. The separation of these cups for use can therefore be extremely frustrating and require substantial effort from a user when separating one cup from another.

These cups also have surfaces that have a tendency to have sticky substances, such as oils and animal fat, adhere to them, adding to the difficulty of separating them The stackable measuring cups are usually provided with spouts that facilitate pouring of the measured contents.. In the course of time, these spouts undergo physical deterioration and give rise to a dripping problem.

Stackable measuring cups are needed that have a drip free pouring structure, a non-stick surface, and a configuration that prevents wedging or sticking of the cups together when they are stacked.

### Summary of the Invention

A measuring device is described that comprises a plurality of stackable measuring cups that are held together by a ring. Each cup of the device comprises a container portion and a handle portion The container portion has a lobed sidewall that defines an epicycloidal configuration that is adapted to leave a space between cups to maintain air flow between the cups when they are stacked The flow of air prevents sticking of the surfaces of cups that enables separation of the cups with fewer efforts.

The lobed sidewall of container portion defines a container of a predetermined volumetric capacity in a rosette or epicycloidal shape with about five lobes. The container is preferably made of silicone and has a non-porous and nonstick surface that is adapted to measure ingredients both solid and liquid including sticky ingredients The epicycloidal configuration of the container portion facilitates lobes to form a plurality of channels and a plurality of raised portions, five of each are shown

The cup includes a plurality of spouts formed by the lobes. The lobes form concave channels that are adapted to facilitate a drip-free and dumping-free discharge of the measured ingredients.. Each cup has a brim of a circular configuration with a flat surface that is adapted to act as a leveling tool.

### Brief Description of Drawings

The above mentioned and other features, aspects and advantages of the present invention will become better understood with regard to following description, appended claims and accompanying drawings, wherein like reference numerals refer to similar parts throughout the several views where:
FIG. 1 is a front view of a measuring device that includes a nested plurality of measuring cups constructed in accordance with the present invention;
FIG.. 2 is a perspective view of one of the measuring cups of FIG. 1;
FIG.3 is a top view of one ofthe measuring cups of FIG. 1;
FIG. 4 is a side view of one of the measuring cups of FIG. 1;
FIG. 5 is a perspective view of the measuring device of FIG. 1;
FIG 6 is a perspective view of two cups of the measuring device of FIG. 1;
FIG. 7 is a cross-sectional view taken along lines 7-7 of the cups of FIG 6;
FIG. 8 is a rear view of the measuring device showing the cups in stacked configuration;
FIG. 9 is a perspective view of the device of FIG. 1 in use with one of the measuring cups spaced in a position for use;
FIG. 10 is perspective view of the measuring device of FIG. 1 in use with one of the measuring cups;
FIG. 11 is perspective view of the measuring device of FIG. 1 in use with one of the measuring cups; and
FIG. 12 is perspective view of the measuring device of FIG. 1 in use with one of the measuring cups.

### Description of the Preferred Embodiment of the Invention

Although specific terms are used in the following description for sake of clarity, these terms are intended to refer only to particular structure of the invention selected for illustration in the drawings, and are not intended to define or limit the scope of the invention..

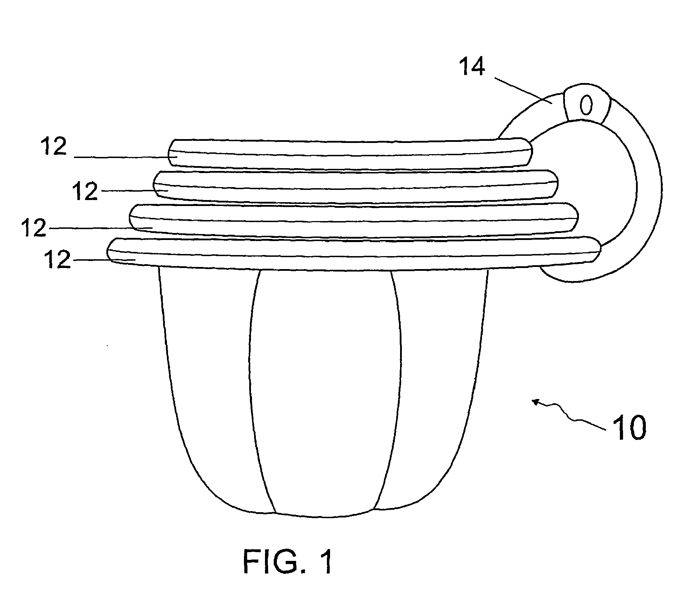

Referring initially to FIG. 1, a measuring device 10 includes a plurality of measuring cups 12 in a stacked or nested relationship Device 10 includes a ring 14 that holds cups 12 together. Ring 14 is preferably an annular member. Each cup 12 preferably is of elongated hemispherical shape. Each larger cup 12 defines a configuration that accommodates each smaller cup 12 to form a stacked relationship. Cups 12 preferably have the same shape, but substantially vary in their dimensions.. In this one preferred embodiment, device 10 includes four measuring cups 12 that are of one-quarter cup, one-half cup, three-quarters of a cup and one cup sizes respectively It is understood, however, that the size and quantity of cups 12 can vary with the intended application of the measuring device 10. Device 10 is preferably made of structurally rigid and moldable plastic, preferably silicone..

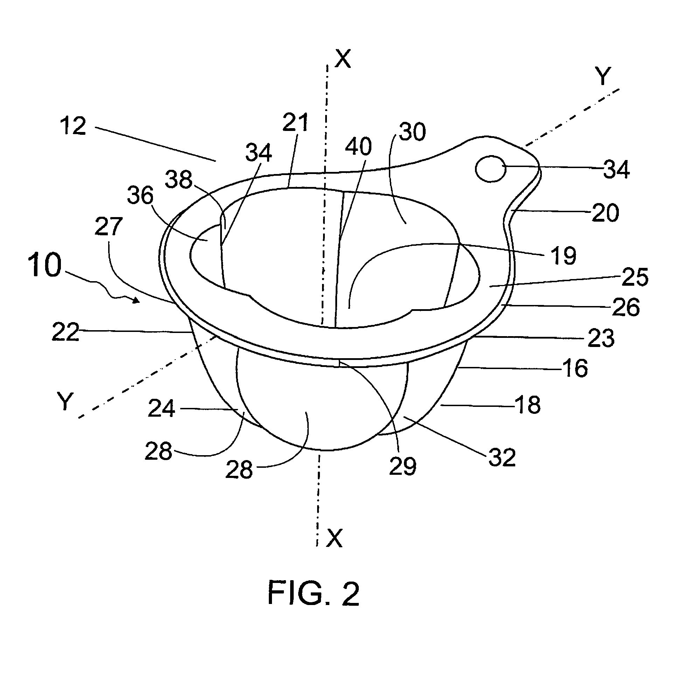

Referring to FIG. 2, one of the measuring cups 12 is shown. Cup 12 has a lobed sidewall 16 that defines a container portion 18 and a handle portion 20 Container portion 18 is preferably of elongated spherical shape. Container portion 18 defines a central axis-X that preferably extends through a center of container portion 18. Handle portion 20 preferably laterally extends from container portion 18 along a second axis-Y that is approximately perpendicular to the central axis-X. Sidewall 16 of' container portion 18 has lobed shape that defines a container 19 of' an epicycloidal configuration. Container 19 has a volumetric capacity that is substantially calibrated by the standard volume calibration measures.

Container portion 18 further includes a proximal end portion 22 and a distal end portion 24.. The proximal end portion 22 defines an epicycloidal tip 21 that defines an open top end of container 19. Epicycloidal tip 21 is integrally connected to a brim 26 that preferably laterally protrudes from tip 21 along a plane defined by handle portion 20. Brim 26 has a circular edge 23 that has a diameter that is approximately three times the length of handle portion 20. Brim 26 has a substantially flat top surface 25 and a bottom surface 27 that define a thickness 29.

The epicycloidal configuration of sidewall 16 defines a plurality of lobes 28 in container portion 18 that are integrally connected to each other. In this embodiment, container portion 18 includes five lobes 28 that are circumferentially spaced about the central axis-X. Each lobe 28 preferably occupies one-fifth volume of container portion 18 The epicycloidal configuration of sidewall 16 facilitates each lobe 28 to have a concave inner surface 30 and a convex outer surface 32.

Inner surfaces 30 of two adjacent lobes 28 preferably meet to define a longitudinally raised portion 34. Each raised portion 34 has a first face 36 and a second face 38 that preferably substantially extend towards the center of container portion 18 to end into a sharp edge 40

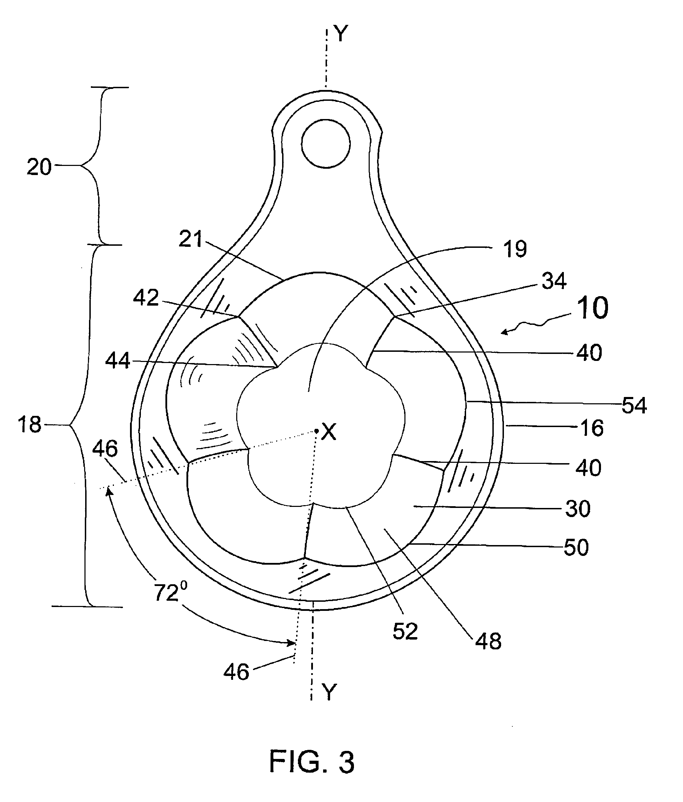

Referring to FIG. 3, edges 40 of raised portions 34 preferably have a top end 42 and a bottom end 44 Each edge 40 preferably extends in a parabolic fashion between top end 42 and bottom end 44. In this embodiment, each edge 40 defines a plane 46 that preferably makes an angle of about 72° with the plane 46 of the adjacent edge 40.

The concave inner surface 30 of sidewall 16 defines a plurality of concave channels 48 that preferably longitudinally extend between raised portions 34 Each channel 48 has an outwardly curved upper end 50 that defines a portion of' epicycloidal tip 21. Each channel 48 has an outwardly curved lower end 52 disposed between two adjacent bottom ends 44. Ends 50 and 52 preferably define axial boundaries of channels 48.

Upper curved end 50 of' each channel 48 acts as a spout 54 that is advantageously formed within container 19. Each spout 54 is adapted to permit a drip-free discharge of the measured ingredients In this one preferred embodiment, container 19 includes five channels 48, five spouts 54 and five raised portions 34 that form the epicycloidal configuration of container portion 18

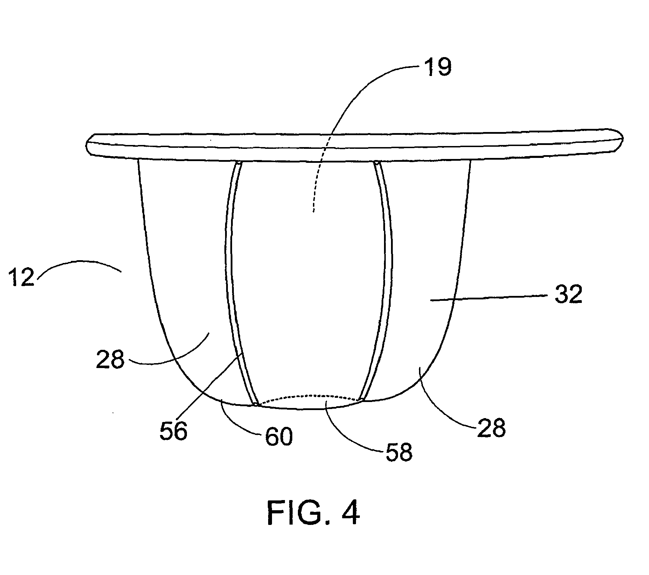

Referring to FIG. 4, outer surfaces 32 of lobes 28 preferably define a plurality of longitudinally recessed portions 56 that are preferably adapted to be fitted upon longitudinally raised portions 34(shown in FIG 3) of smaller cups 12. Container 19 has a bottom 58 defined by a bottom wall 60 of container portion 18. Bottom 58 preferably has a flat surface that advantageously allows cup 12 to rest upon a platform such as a table or the like

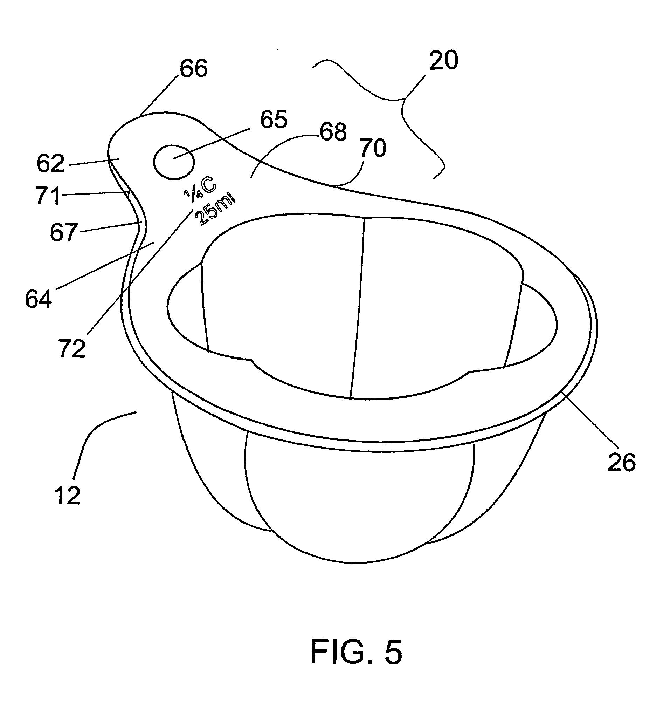

Referring to FIG. 5, handle portion 20 includes a proximal end portion 62 and a distal end portion 64. Proximal end portion 62 of handle portion 20 includes a hole 65 that has a diameter that is approximately one-tenth the diameter of brim 26. Hole 65 is preferably adapted to receive the ring 14 (shown in FIG 1) Proximal end portion 62 has a semicircular end 66 that is adapted to be comfortably grasped between a thumb and a forefinger of a hand. The distal end of handle portion 20 is substantially truncated into brim 26 to form curved portions 67 that smoothly merge handle portion 20 into brim 26..

Handle portion 20 has a top surface 68 and a bottom surface 70 that define a thickness 71 that is approximately equal to thickness 29 (shown in FIG.. 2) of brim 26. Handle portion 26 is indented with a marking 72 that shows the corresponding volumetric capacity of' container portion 18. Handle portion 20 has the length that is approximately one-third the diameter of brim 26. It is understood, however, that the length and thickness 71 of handle portion 20 can vary with the intended application of' device 10. It is also understood that all the above mentioned details are applicable to all measuring cups 12

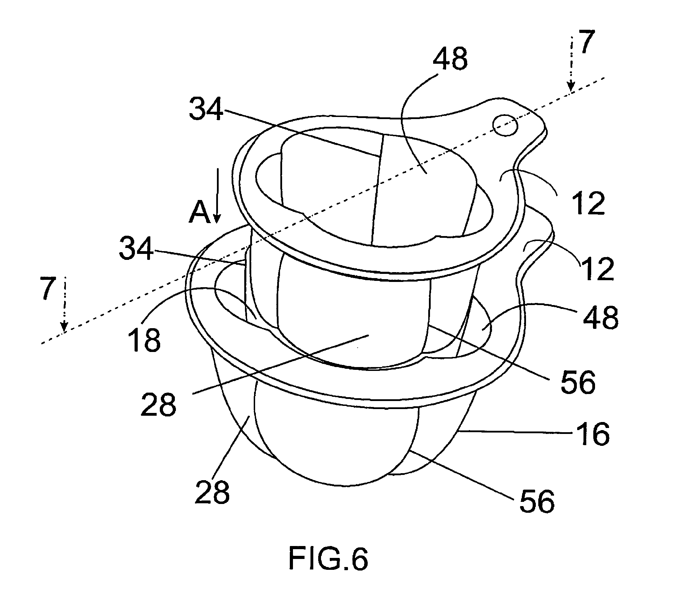

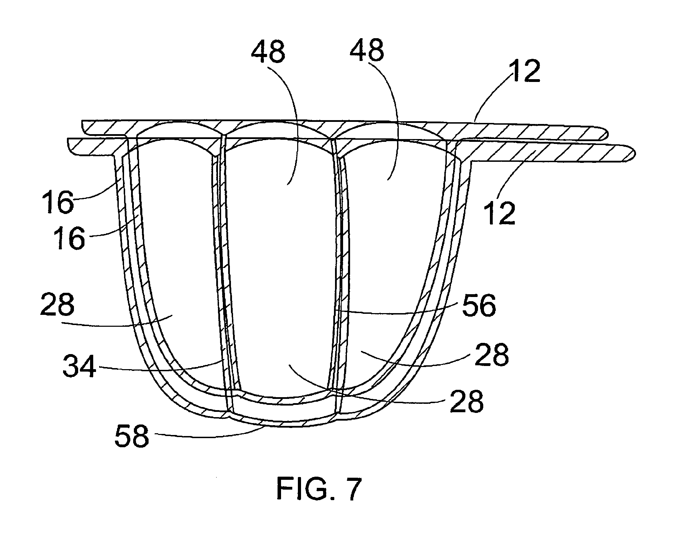

Referring to FIGS. 6 and 7, container portion 18 of one of the cup12 is shown receiving container portion 18 of adjacent smaller cup 12 in a direction shown by the directional arrow A.. In this position, longitudinally raised portions 34 defined in each larger cup 12 are preferably adapted to receive longitudinally recessed portions 56 of adjacent smaller cup 12. This preferably hold smaller cup 12 positioned within larger cup 12 Longitudinally raised portions 34 of each larger cup 12 define a configuration that receives only a limited fraction of adjacent smaller cup 12. During insertion, surface 32 around longitudinally recessed portions 56 of smaller cup 12 preferably contacts surface 30 around longitudinally raised portions 34 of larger cup 12 In this position, the epicycloidal configuration of sidewall 16 advantageously prevents channels 48 from being contacted by lobes 28 of smaller cup 12 It is understood, however, that all the above mentioned details are applicable to all cups 12 of device 10.

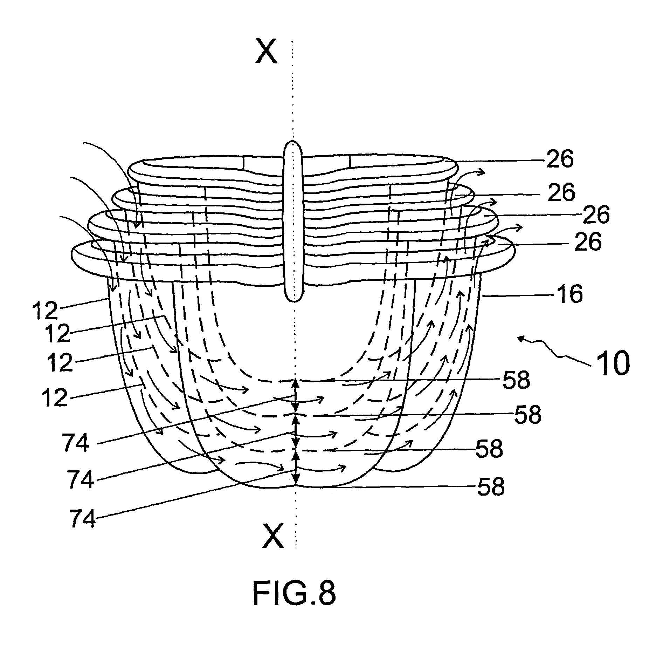

Referring to FIG. 8, the epicycloidal configuration of cups 12 facilitates each smaller cup 12 to rest at a distance 74 above bottom 58 of each larger cup 12 Channels 48 and distances 74 advantageously form a void between the cups 12 that allows air to flow in between the cups 12. The flow of air between cups 12, in this embodiment, is shown by the arrows that are substantially directed in a single direction. It is understood, however, that the flow of air can be from many possible directions Each distance 74 is such that brim 26 of smaller cup 12 substantially rests above the brim 26 of the adjacent larger cup 12 that facilitates easy separation of cups 12 from each other. The flow of the air also ensures minimum intersurface contact between cups 12 that advantageously avoids sticking of cups 12.

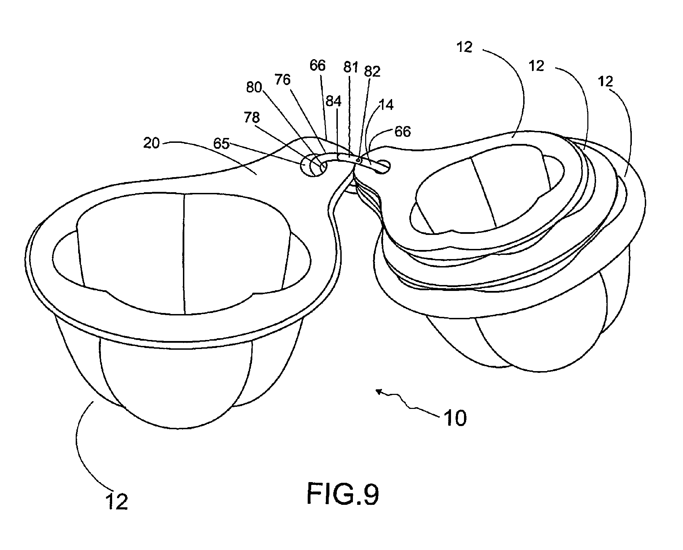

Referring to FIG. 9, one of the cups 12 is shown spaced in a position for the use. Ring 14 has a circular outer surface 76 that has a diameter that is approximately three times the diameter of hole 65 defined in handle portion 20 Ring 14 has a circular inner surface 78 that defines a boundary of void section 80 defined within ring 14 The void section 80 is preferably configured to comfortably accommodate the semicircular ends 66 of all cups 12. Ring 14 is provided with a locking mechanism 81 that has a hinged end 82 and a free end 84 that are preferably adapted to lock or unlock the cups 12 from ring 14

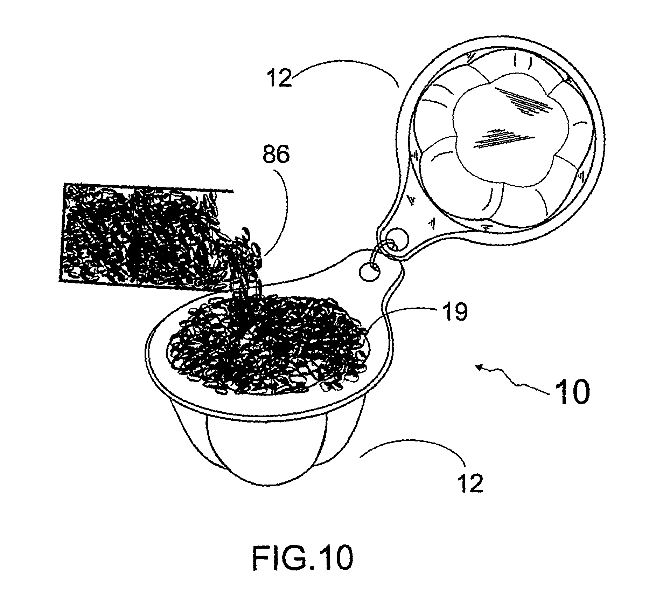

As shown in FIG 10, container 19 of cup 12, in operation, is initially over filled with a mound of an ingredient 86 that is dispensed from the storage using a pot or jar. Cup 12 is preferably kept unshaken while dispensing ingredient 86 from the pot into container 19 For the accurate measurement ofingredient 86, cup 12 is preferably overfilled without packing or pressing ingredient 86 in container 19. In this one preferred embodiment device 10 is shown measuring a solid ingredient 86, but it is understood that device 10 can be used to measure a liquid or a sticky ingredient 86 such as oils, and fat, for example

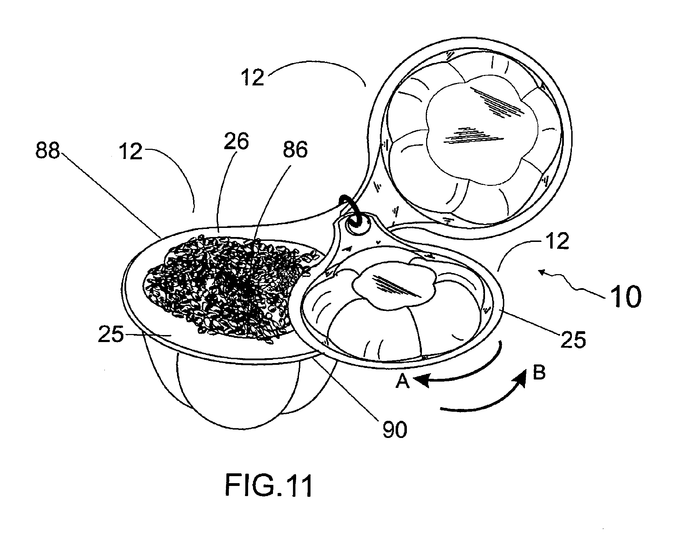

As shown in FIG. 11, brim 26 of each lager cup 12 in the stack can be advantageously used as a leveling tool for adjacent smaller cup 12 in the stack.. Overfilled ingredient 86 is leveled by laterally translating brim 26 of adjacent larger cup 12 over the brim 26 of cup 12 that is in use. Top surface 25 of brim 26 is preferably configured to form an intimate contact with the top surface 25 of adjacent brim 26 defined by the smaller cup 12. In this embodiment, brim 26 of larger cup 12 preferably laterally travels from a first side 88 to a second side 90 of the respective cup 12 in a clockwise wise direction shown by the directional arrow B. However, it is understood that brim 26 of larger cup12 can travel from second side 80 to first side 78 in a counter-clock direction shown by the directional arrows C The circular edge 23 of the brim 26 advantageously levels the quantity of ingredient 86 by removing excess amount of ingredient 86 from cup 12.

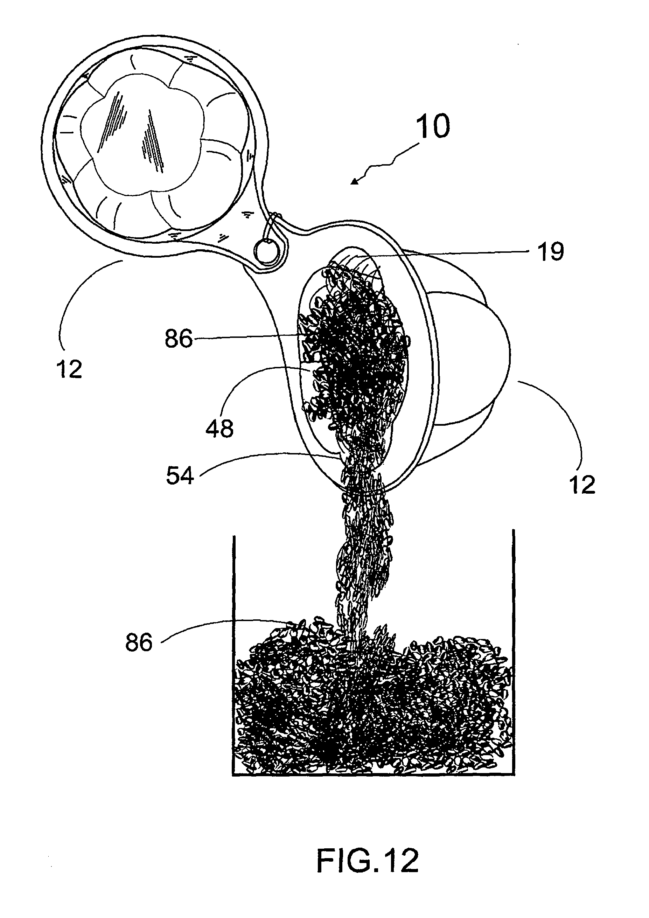

As shown in FIG. 12, an accurately measured ingredient 86 in container 19 is poured into a mixing area such as a container, a dish and a bowl, for example. Spouts 54 facilitate a drip free discharge of measured ingredient 86 into the mixing area. In addition, channels 48 provide a clumping free discharge of the measured ingredient 86. This allows measured ingredient 86 to fall as a single stream into the mixing area The drip free and clumping free discharge of the measured ingredient 86 advantageously allows the user to transfer the measured ingredient 86 into the mixing area without any spillage.

As shown in FIGS. 1-12, device 10, in operation, has non-porous sidewall 16 silicone that advantageously repels odors and/or flavors to device 10. In addition, the non-stick surface of silicone sidewall 16 has nonadherence to sticky substances that advantageously minimizes efforts and time of the user into cleaning of device 10.

Spouts 54 are advantageously constructed within container portion 18 that allows them to undergo minimum physical deterioration. This enhances their ability to provide drip-free discharge of ingredient 86 for a longer period of time.

The flow of air between cups prevents sticking of the surfaces of cups 12 that advantageously ensures easy separation of the cups 12. In addition, lobed construction of sidewall 16 minimizes inter-surface contact between cups 12 that allows the user to take fewer efforts to separate cups 12.

Device 10 has single mold silicone construction that has a property to be operated over a broad temperature range of 525°F to -185°F. This advantageously allows the user to safely handle the extremely hot or cold ingredients 76..

The embodiments ofthe invention shown and discussed herein are merely illustrative of modes of application of the present invention. Reference to details in this discussion is not intended to limit the scope of the claims to these details, or to the figures used to illustrate the invention

## Claims

1. A measuring device comprising:
a silicone measuring cup that has a lobed sidewall adapted to fit into a slightly larger cup with an outermost point of each lobe contacting an inner surface of the sidewall of the larger cup to permit air to flow between the adjacent lobes in the cup and the inner surface of the sidewall ofthe larger cup.

2. The measuring device of claim 1, wherein a plurality of spouts defined by a plurality of channels formed by the lobed sidewall adapted to permit drip free pouring of a measured ingredient.

3. The measuring device of claim 2, wherein the spouts define a brim that laterally extends from the spouts and has a substantially flat surface adapted to act as a leveling tool that accurately levels the measured ingredient to ensure an accurate measurement.

4. The measuring device of claim 1, wherein the inner surface of the lobed sidewall defines a plurality of longitudinally raised portions adapted to stop an axial inward movement of the next smaller cup.

5. The measuring device of claim 1, wherein the lobed sidewall defines a plurality of channels adapted to facilitate a spillage-free and single stream discharge of the measured ingredient from the spouts.

6. The measuring device of claim 1, wherein the measuring cup has a handle portion that has a thickness that is equal to a thickness of the brim.

7. The measuring device of' claim 1, wherein the handle portion has a length that is approximately one-third the length of the brim.

8. The measuring device of claim 6, wherein the handle portion includes a hole adapted to receive a ring and has a diameter that is approximately one-tenth the diameter of the brim.
